Europäisches Patentamt

European Patent Office

Office européen des brevets

(11) Veröffentlichungsnummer: **0 143 368**
**A2**

# (12) EUROPÄISCHE PATENTANMELDUNG

(21) Anmeldenummer: 84113339.0

(22) Anmeldetag: 06.11.84

(51) Int. Cl.⁴: **F 16 D 3/10, F 02 D 1/18**

(30) Priorität: 26.11.83 DE 3342905

(43) Veröffentlichungstag der Anmeldung: 05.06.85
Patentblatt 85/23

(84) Benannte Vertragsstaaten: **FR IT NL SE**

(71) Anmelder: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Dreher, Gunther, Dipl.-Ing., Überlinger Weg 8, D-8000 München 60 (DE)**

(54) **Wellenkopplungssystem.**

(57) Zur verstellbaren Momentenübertragung der Drehbewegung einer Antriebswelle (12) auf eine Abtriebswelle (11) wird ein Planetengetriebe (16, 17) vorgeschlagen, bei dem das Hohlrad (23) mittels eines Schrittmotors (24) festgehalten und in Abhängigkeit von Meßgrößen geschwenkt werden kann derart, daß die Winkellage zwischen der Abtriebswelle (11) und der Antriebswelle (12) verändert werden kann. Ein elektronisches Steuergerät (27) steuert den Schrittmotor. Ein derartiges Momentenübertragungssystem (10) ist beispielsweise als Spritzversteller für Dieseleinspritzpumpen verwendbar.

M.A.N. MASCHINENFABRIK AUGSBURG-NÜRNBERG
Aktiengesellschaft
gü/sd


München, 25. November 1983


Wellenkopplungssystem


Die Erfindung betrifft ein Wellenkopplungssystem mit einer Antriebswelle und einer gegenüber der Antriebswelle verdrehbaren Abtriebswelle.

Systeme dieser Art werden beispielsweise dort verwendet, wo ein Gerät durch eine Welle in Abhängigkeit der Drehgeschwindigkeit einer Antriebswelle und der relativen Winkellage zwischen den beiden Wellen gesteuert wird. Ein Beispiel einer derartigen Kopplung ist ein Spritzversteller für Einspritzpumpen für Dieselmotoren. Die Druckventile für die Einspritzdüsen werden mittels einer Nockenwelle synchron zur Motordrehzahl betätigt. Der Zeitpunkt für die Einspritzungen wird durch die relative Winkellage zwischen den Nocken bzw. der Nockenwelle und der Antriebswelle bestimmt und über den Spritzversteller in Abhängigkeit der Drehzahl verstellt. Bei Einspritzpumpen für Dieselmotoren wird ein mechanischer Fliehkraft-Spritzversteller verwendet.

Ein derartiger mechanischer Spritzversteller bietet jedoch keine Möglichkeit, die Winkelphase zwischen der Antriebs- und der Abtriebswelle unter Berücksichtigung anderer Größen oder Parameter als die Drehgeschwindigkeit zu steuern.

7.2221

0143368

Der Erfindung liegt die Aufgabe zugrunde, ein System der eingangs genannten Art zu entwickeln, das einen fertigungstechnisch einfachen Aufbau hat und mit dem die Wellenphase in einer einfachen Art in Abhängigkeit von mehreren Parametern gesteuert werden kann.

Die Aufgabe ist erfindungsgemäß durch die im Anspruch 1 gekennzeichneten Merkmale gelöst.

Mit diesem elektromechanischen Aufbau ist ein Wellenkopplungssystem mit relativ unempfindlichen Bauelementen geschaffen, das in der Baugröße kleingehalten werden kann, wodurch bereits bestehende Aggregate mit dem erfindungsgemäßen System ausgerüstet werden können. Die Vorrichtung hat den weiteren Vorteil, daß der Schrittmotor eine einfache Schnittstelle zu einem Rechner hat, so daß durch entsprechende Programmierung des Rechners beliebige Steuergesetze bzw. Meßgrößen für die Phasenverstellung berücksichtigt werden können.

Gemäß einer Weiterbildung der Erfindung wirkt der Schrittmotor über eine Schneckenwelle auf das verstellbare Hohlrad ein. Dieses System ist funktionssicher, indem bei einem Ausfall der Regelung bzw. des Rechners das Kopplungssystem aufgrund des selbstsperrenden Verstellmechanismus gefahrenlos weiter in Betrieb gehalten werden kann.

Falls die von der Abtriebswelle angetriebene Maschine bei Ausfall der Verstelleinrichtung nicht in jeder von ihr erreichbaren Phasenlage beider Wellen sicher betrieben werden kann, ist es vorteilhaft, wenn die Ankopplung des Schrittmotors nach Anspruch 4 ausgebildet ist.

7.2221
25.11.1983

Bei der Verwendung des Wellenkopplungssystemes als Spritzversteller, kann dieser so konzipiert werden, daß er in handelsüblichen Einspritzpumpen direkt einbaubar ist.

Ausführungsbeispiele gemäß der Erfindung sind in der Zeichnung schematisch dargestellt.

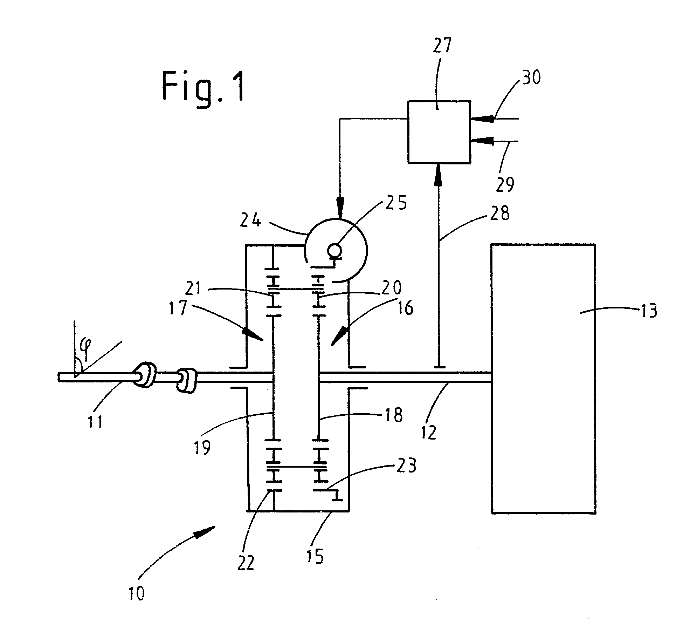

Fig. 1 stellt ein Wellenkopplungssystem 10 da, das eine als Nockenwelle ausgebildete Abtriebswelle 11 drehbeweglich mit einer Antriebswelle 12 verbindet, die von einem Motor 13 betrieben wird.

Ein derartiges Kopplungssystem kann beispielsweise ein Spritzversteller für eine Dieseleinspritzpumpe sein, wobei die Nockenwelle in Abhängigkeit der Motordrehzahl die Druckventile für die einzelnen Einspritzkanäle betätigt. Die Ganghärte und Motorleistung wird verbessert, wenn der Spritzbeginn mit steigender Drehzahl vorverlegt wird. Die Verlegung des Spritzbeginns erfolgt durch relative Winkelverdrehung $\varphi$ zwischen der Nockenwelle 11 und der Antriebswelle 12. Die Steuerung der Winkelphase $\varphi$ erfolgt über das Wellenkopplungssystem 10.

Das Kopplungssystem 10 besteht aus zwei, in einem Gehäuse 15 angeordneten Planetengetrieben 16 und 17, deren Sonnenräder 18 bzw. 19 jeweils mit der Antriebswelle 12 bzw. der Abtriebswelle 11 verbunden sind. Die Momentenübertragung erfolgt über die Planetenräder 20, 21. Bei (wie in der Zeichnung dargestellt) gleichen Planetengetrieben erhält man ein Übersetzungsverhältnis gleich 1. Diese Übersetzung ist beispielsweise bei einer Spritzverstelleinrichtung erforderlich, da das Einspritzsystem synchron mit der Motordrehzahl

7.2221
25.11.1983

laufen muß. Je nach Anwendungsfall wird jedoch das für den jeweiligen Fall erforderliche Übersetzungsverhältnis durch entsprechene Wahl der Planetengetriebe bestimmt.

Das Hohlrad 22 des mit der Abtriebswelle 11 verbundenen Planetengetriebes 17 ist drehfest mit dem Gehäuse 15 verbunden.

Zur Verstellung des Phasenwinkels $\varphi$ zwischen Abtriebs- und Antriebswelle 11 bzw. 12 ist das Hohlrad 23 des Planetengetriebes 16 für die Antriebswelle 12 zwar in Betrieb auch fest stehend, jedoch mittels einem Schrittmotor 24 über eine Schneckenwelle 25 in beide Richtungen schwenkbar.

Zur genauen Verstellung des Hohlrades 23 und damit der Winkelphase $\varphi$ ist ein Steuergerät 27 vorgesehen, das den Schrittmotor 24 in Abhängigkeit der Motordrehzahl 28 und anderen Parametern 29, 30 steuert. Bei der Verwendung eines elektronischen Steuergerätes 27 kann ein Steuerprogramm verwendet werden, das verschiedene Gesetzmäßigkeiten und Meßgrößen berücksichtigt.

Je nach Bedarf wird der Schrittmotor 24 - angesteuert durch das Steuergerät 27 - während des Betriebes das Hohlrad 23 um einen entsprechenden Winkel vor- oder zurückschwenken. Damit überlagert sich die dabei auf die Planetenräder 20 und 21 übertragene Drehung mit deren Rotation, so daß die Abtriebswelle 11 eine Verdrehung gegenüber der Antriebswelle 12 erfährt.

7.2221
25.11.1983

0143368

Der aus Schrittmotor 24 und Schneckenwelle 25 bestehende Verstellmechanismus ist bei Ausfall der Stromzufuhr oder des Reglers 27 selbstsperrend. Dieses gewährleistet eine sichere Fortführung des Wellensystembetriebes, allerdings ohne Verstellmöglichkeiten der Winkelphase $\varphi$, diese bleibt in der beim Ausfall eingenommenen Stellung stehen.

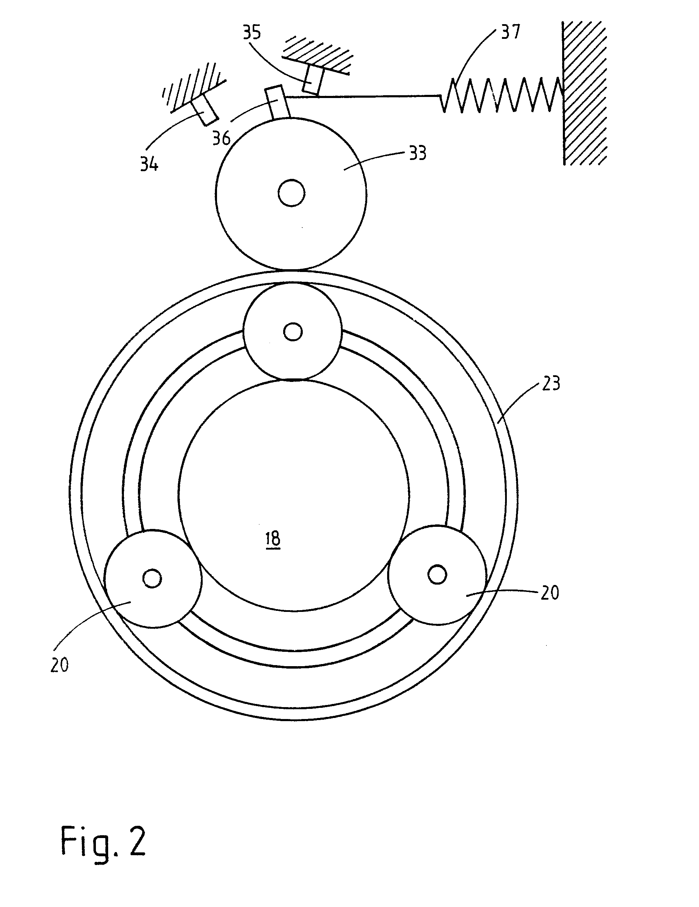

Ist ein sicherer Betrieb der von der Abtriebswelle betriebenen Maschine nicht in jeder Winkelphasenlage gewährleistet, so kann die Kopplung des Schrittmotors gemäß Fig. 2 über ein Zahnrad 33 erfolgen, das mit einem zwischen zwei Begrenzungsanschlägen 34 und 35 bewegbaren Noppen 36 versehen ist. Hierdurch wird die Schwenkbewegung des Zahnrades 33 und damit die des Hohlrades 23 und folglich die erreichbaren Winkel-phasen $\varphi$ innerhalb von zulässigen Werten begrenzt. Die Noppe 36 ist ferner mit einer Rückstellfeder 37 verbunden, die das Zahnrad in eine einer für den Betrieb sicheren Phasenlage entsprechenden Stellung bringt, wenn der Schrittmotor oder dessen Steuerung ausfällt.

7.2221
25.11.1983

M.A.N. MASCHINENFABRIK AUGSBURG-NÜRNBERG
Aktiengesellschaft
gü/sd

München, 25. November 1983

<u>P a t e n t a n s p r ü c h e</u>

1. Wellenkopplungssystem mit einer Antriebswelle und einer gegenüber der Antriebswelle
verdrehbaren Abtriebswelle, dadurch gekennzeichnet, daß die Antriebswelle (12) und die
Abtriebswelle (11) über zwei hintereinander
geschalteten Planetengetriebe (16, 17) miteinander verbunden sind, daß das Hohlrad (22)
eines ersten Planetengetriebes (17) fest ist,
und daß das Hohlrad (23) des zweiten Planetengetriebes (16) mittels eines Schrittmotors
(24) verstellbar ist.

2. System nach Anspruch 1, dadurch gekennzeichnet,
daß das Gesamtübersetzungsverhältnis der beiden
Planetengetriebe (16, 17) gleich 1 ist.

3. System nach Anspruch 1 oder 2, dadurch gekennzeichnet, daß der Schrittmotor (24) über eine
Schneckenwelle (25) auf das verstellbare
Hohlrad (23) einwirkt.

7.2221

4. System nach Anspruch 1 oder 2, dadurch gekennzeichnet, daß der Schrittmotor direkt oder über ein Zahnrad (33) auf das Hohlrad (23) einwirkt, dessen Drehbewegung durch Anschläge (34, 35) begrenzt ist, und das durch eine Feder (34) bei Ausfall des Schrittmotors in eine bestimmte Endlage gebracht wird.

5. System nach einem der vorhergehenden Ansprüche, dadurch gekennzeichnet, daß der Schrittmotor (24) von einem Regler (27) angesteuert wird.

6. System nach Anspruch 5, dadurch gekennzeichnet, daß der Regler (27) elektronisch arbeitet und den Schrittmotor (24) in Abhängigkeit von der Antriebsdrehzahl (28) und weiteren Größen (29, 30) regelt.

7. System nach einem der vorhergehenden Ansprüche, dadurch gekennzeichnet, daß das Wellenkopplungssystem (10) ein Spritzversteller für eine Brennstoffeinspritzpumpe ist.

7.2221
25.11.1983

Fig.1

Fig. 2